# EUROPEAN PATENT SPECIFICATION

(11) **EP 2 778 580 B1**
(45) Date of publication and mention of the grant of the patent: **26.06.2019**
(21) Application number: 14158608.1
(22) Date of filing: 10.03.2014
(51) Int. Cl.: F25D 23/06, B21D 51/52, B65D 81/38, A47B 96/20

(54) **Vacuum insulated structure tubular cabinet construction**
Rohrförmiger Gehäuseaufbau mit vakuumisolierter Struktur
Construction d'armoire tubulaire à structure isolée sous vide

(30) Priority: 15.03.2013 US 201313836143
(43) Date of publication of application: 17.09.2014
(73) Proprietor: Whirlpool Corporation, Benton Harbor, MI 49022 (US)
(72) Inventor: Allard, Paul B., Benton Harbor, MI Michigan 49022 (US); Cur, Nihat, Benton Harbor, MI Michigan 49022 (US); Kendall, James W., Benton Harbor, MI Michigan 49022 (US); Kuehl, Steven J., Benton Harbor, MI Michigan 49022 (US); Ramm, Axel Julio, Benton Harbor, MI Michigan 49022 (US); Wu, Guolian, Benton Harbor, MI Michigan 49022 (US)
(74) Representative: Spina, Alessandro

(56) References cited:
- DE-A1- 19 818 890
- FR-A1- 2 980 963
- JP-A- H04 165 197
- JP-A- 2000 097 390
- JP-A- 2007 263 186
- JP-A- 2010 108 199
- JP-A- 2011 002 033
- JP-A- 2012 163 258
- JP-A- 2013 050 242
- JP-A- 2013 088 036
- JP-U- S59 191 588
- KR-A- 20120 007 241
- US-A- 2 985 075
- US-A- 5 175 975
- US-A- 5 640 828
- US-A1- 2002 168 496

## Description

Various types of insulated cabinet structures have been developed for refrigerators, freezers and the like. Known refrigerator cabinet structures may include inner and outer walls with urethane foam or other insulating material disposed between the inner and outer walls. For example, US-A1-2002/0168496 discloses a method of forming a plate-shape vacuum insulation material by inserting a thermoplastic open-celled rigid foam as a core material into a packet composed of a gas barrier film. The package is then evacuated and sealed to form a rigid vacuum insulation material. This rigid material can then be heated and softened to form into various shapes. The foam core material may have notched grooves formed in it, before it is inserted into the packet, these grooves forming fold lines for the eventual deforming of the panel. JP-A-2000-097390 discloses a heat insulation panel which consists of a bag containing an inorganic powder. The bag containing the powder may be molded to have plural protrusions to form a pressure powder molded product. DE-A1-19818890 discloses a method for producing a refrigerator which uses a continuously produced foam sandwich element cut into measured sections to form a box. JP-A-H04136197 discloses a vacuum insulating member formed from a cylindrical metal body in internal contact with a parison and containing hard urethane powder.

One aspect of the present invention is a method of forming a vacuum insulated refrigerator housing structure as defined in claim 1. The tube may be formed from a metal material, or the tube may comprise multiple layers of polymer material, wherein one of the layers is substantially impermeable to gasses such as nitrogen, oxygen and water vapor. The elongated tube has a substantially uniform cross-sectional shape along the length of the tube, and the tube defines generally planar first and second oppositely facing primary outer surfaces. The tube further includes first and second end surfaces extending between the first and second primary outer surfaces. The method further includes forming the tube along at least four fold lines to form at least four corners, whereby portions of the first primary surface adjacent each corner are substantially orthogonal relative to one another. The method further includes sealing the opposite ends of the elongated tube to form an air-tight insulating space within the tube. The opposite ends of the tubes are connected to one another to form a refrigerator housing structure that is generally "O" shaped with horizontally spaced apart, generally vertical side walls and vertically spaced apart generally horizontal upper and lower side walls forming four corners. The refrigerator housing structure defines an internal space having enlarged front and rear openings. The method further includes forming a vacuum in the insulating space within the tube, and attaching an insulated rear panel to the refrigerator housing structure to at least partially close off the enlarged rear opening.

Another aspect of the present invention is a vacuum insulated refrigerator housing structure as defined in claim 13.

These and other features, advantages, and objects of the present invention will be further understood and appreciated by those skilled in the art by reference to the following specification, claims, and appended drawings.

The present invention will be further described by way of example with reference to the accompanying drawings in which:-
Fig. 1 is an isometric view of a refrigerator having a vacuum insulated tubular cabinet according to one aspect of the present invention;
Fig. 2 is an exploded isometric view of the refrigerator of Fig. 1;
Fig. 3 is a cross-sectional view of the refrigerator housing of Fig. 2 taken along the line III-III;
Fig. 4 is a partially schematic isometric view of an extrusion apparatus and process;
Fig. 5 is an isometric view of a tube prior to bending;
Fig. 6 is a partially fragmentary isometric view of a portion of the tube of Fig. 5;
Fig. 7 is a partially fragmentary isometric view of a portion of the tube of Fig. 5;
Fig. 8 is a partially schematic view showing the tube of Fig. 5 during the bending process;
Fig. 9 is a partially schematic view showing the tube of Fig. 5 during a second step of the bending process; and
Fig. 10 is a partially fragmentary enlarged view of a portion of the tubular cabinet structure of Fig. 9.

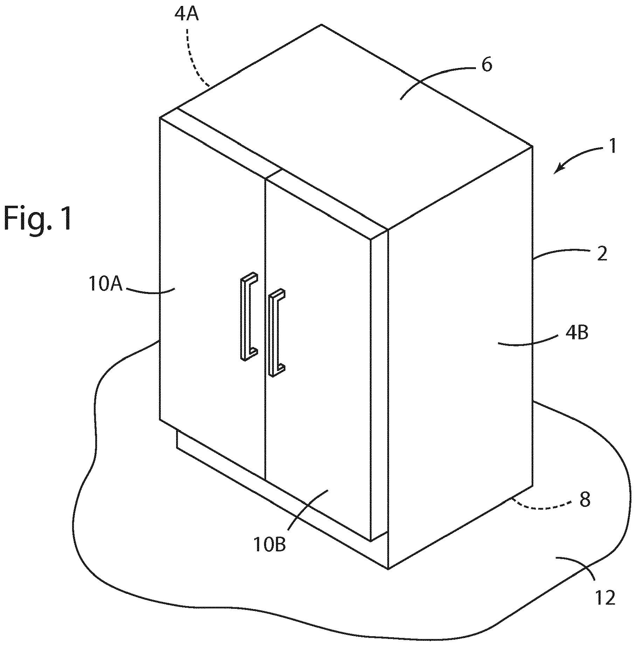

For purposes of description herein, the terms "upper," "lower," "right," "left," "rear," "front," "vertical," "horizontal," and derivatives thereof shall relate to the invention as oriented in Fig. 1. However, it is to be understood that the invention may assume various alternative orientations and step sequences, except where expressly specified to the contrary. It is also to be understood that the specific devices and processes illustrated in the attached drawings, and described in the following specification, are simply exemplary embodiments of the inventive concepts defined in the appended claims. Hence, specific dimensions and other physical characteristics relating to the embodiments disclosed herein are not to be considered as limiting, unless the claims expressly state otherwise.

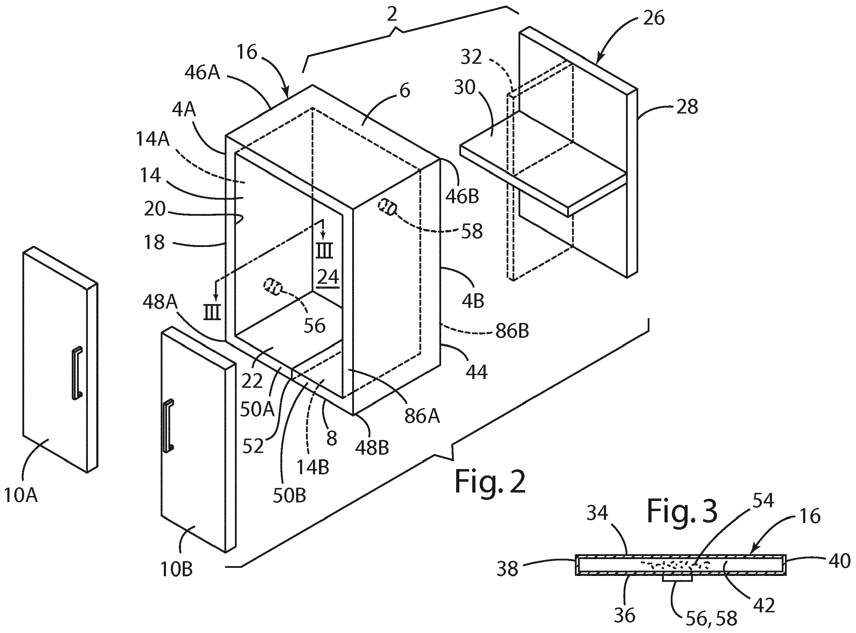

With reference to Fig. 1, a refrigerator 1 includes an insulated cabinet structure 2 including generally upright side walls 4A and 4B, a horizontally extending upper side wall 6, and a generally horizontal lower side wall 8. Doors 10A and 10B are moveably connected to the insulated cabinet structure 2 to provide access to an insulated interior space 14 (see also Fig. 2) of the refrigerator 1. The refrigerator 1 is generally configured to be supported free-standing on a floor surface 12.

With further reference to Fig. 2, the insulated cabinet structure 2 includes a tubular primary structure 16 forming upright side walls 4A and 4B, upper side wall 6, and lower side wall 8. The tubular primary structure 16 is generally O-shaped, with a rectangular outer perimeter 18, and a rectangular inner perimeter 20. The inner perimeter 20 defines an enlarged rectangular front opening 22 and a rectangular rear opening 24. When assembled, the rear opening 24 is closed off by a rear wall assembly 26. The rear wall assembly 26 includes an upright panel 28, and a mullion cooling system 30. The rear wall assembly 26 may optionally include an insulated vertical panel or divider 32 that divides the insulated interior space 14 into a first space 14A and a second space 14B. The first space 14A may comprise a freezer space, and the space 14B may comprise a fresh food compartment. The mullion cooling system 30 may include an interior volume (not specifically shown in Fig. 2) that is configured to receive mechanical equipment for operating the various functions of the refrigerator 1. For example, a cooling module set can be disposed within the interior volume of the mullion 30. Examples of various cooling modules are disclosed in US-A1-2012/0291476 entitled "COOLING SYSTEM INTEGRATION ENABLED PLATFORM ARCHITECTURE" filed on May 15, 2011; US-A1-2012/0291477 entitled "FLEXIBLE COOLING SYSTEM INTEGRATION FOR MULTIPLE PLATFORMS" filed on May 16, 2011; and US-A1-2012/0291475 entitled "UNIVERSAL AND FLEXIBLE COOLING MODULE SET (CMS) CONFIGURATION AND ARCHITECTURE" filed on May 16, 2011.

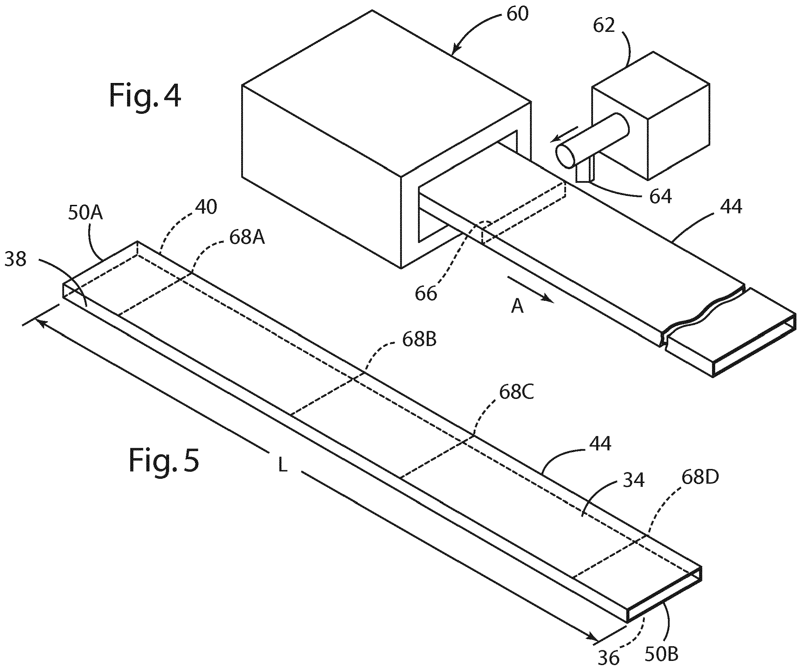

The tubular primary structure 16 is made from an elongated tube 44 (Fig. 5) that includes generally planar side walls 34 and 36 (Fig. 3), and edge or end walls 30 and 40 extending transversely between the inner and outer walls 36. As discussed in more detail below, the tubular primary structure 16 (Fig. 2) is made from a single elongated tube 44 that is deformed to form upper corners 46A and 46B, and lower corners 48A and 48B. Ends 50A and 50B of the tube are interconnected along an air-tight seam 52 that is preferably located in lower side wall 8. The tubular primary structure 16 includes
a continuous, sealed insulating space 42 that is preferably filled with a porous filler material 54. The filler material 54 may comprise a silica powder such as fumed silica or other suitable material, and a vacuum may be formed in space 42 utilizing one or more inlet valves 56, and one or more outlet valves 58. Filler material 54 prevents collapse of tube 44 due to the vacuum formed in space 42 and provides superior insulation performance under vacuum.

With further reference to Fig. 4, tube 44 is initially formed utilizing an extrusion process. An extruding apparatus 60 extrudes the tube 44 in the direction of the arrow "A". The extruding apparatus 60 may comprise a suitable known device. The tube 44 may be formed from a metal material such as low carbon steel, stainless steel, aluminum, or other suitable metal. Alternately, tube 44 may comprise a thermoplastic polymer material such as high impact polystyrene that is co-extruded with a layer of impermeable polymer material such as ethylene vinyl alcohol (EVOH). The EVOH layer is substantially impermeable to oxygen, nitrogen and water vapor to thereby enable formation and maintenance of a vacuum in internal space 42 when the tube 44 is formed into the tubular primary structure 16 (see also Fig. 2).

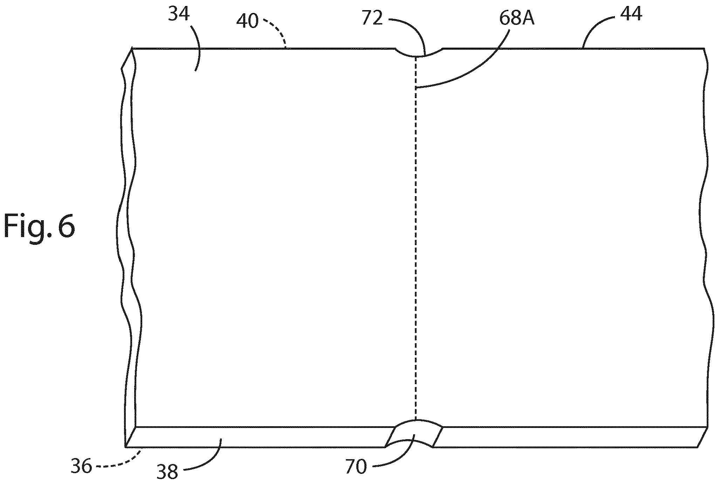

After a sufficient length of tubing 44 is extruded (Fig. 4), a cutting device or apparatus 62 having a cutter 64 is utilized to cut the elongated tube 44 along a plane 66 to thereby form a tube 44 (Fig. 5) having opposite ends 50A and 50B defining a length "L". As discussed in more detail below, the tube 44 is bent along the fold lines 68A-68D to form corners 46A, 46B, 48A and 48B of the tubular primary structure 16 (Fig. 2). With further reference to Fig. 6, prior to formation of the corners 46A, 46B, 48A and 48B, the side walls 38 and 40 are first deformed inwardly at each fold line 68A-68D to form indentations 70 and 72. If tube 44 comprises a metal material, the indentations 70 and 72 may be formed utilizing dies or other known metal forming tools (not shown). If the tube 44 comprises a polymer material, the indentations 70 and 72 may be formed by first heating the elongated tube 44 to soften the polymer material, and a forming tool (not shown) may be utilized to push in the side walls 38 and 40 to form the indentations 70 and 72.

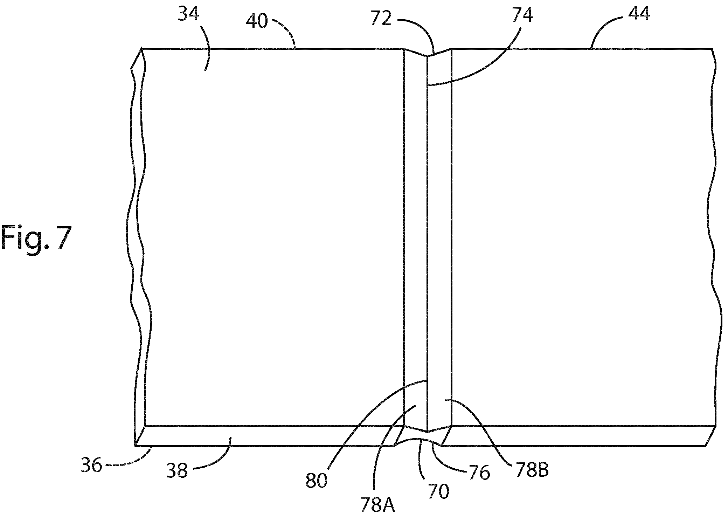

With further reference to Fig. 7, elongated grooves or indentations 74 and 76 (76 not anticipated but could be employed) may also be formed in one or both of side walls 34 and 36 at each fold line 68A-68D. The grooves 74 and 76 may be formed in addition to the indentations 70 and 72, or the grooves 74 and 76 may be formed in a tube 44 that does not include indentations 70 and 72. The grooves 74 and 76 include angled side walls 78A and 78B that intersect at a line or crease 80. The grooves 74 and/or 76 may be formed by heating the tube 44 if the tube 44 is formed of a polymer material, followed by pressing a forming tool (not shown) into the side wall 34 and/or 36 of tube 44. If tube 44 is made of a metal material, a conventional forming die or the like (not shown) may be utilized to form the grooves 74 and 76.

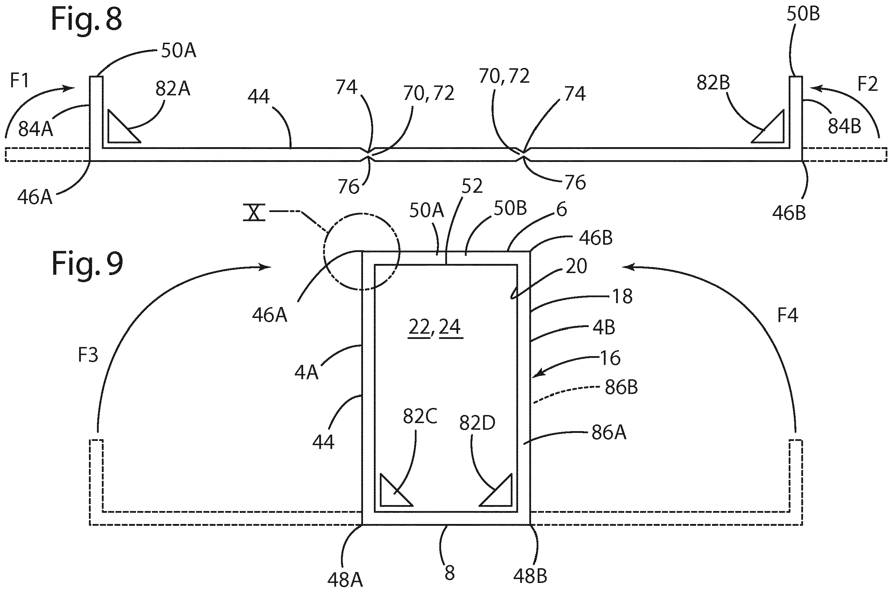

After formation of indentations 70 and/or 72 and grooves 74 and/or 76, the tube 44 is bent utilizing forming tools 82A-82D to form corners 46A, 46B, 48A and 48B as shown in Figs. 8-9. The ends 50A and 50B are then joined together at seam 52. Seam 52 may comprise a welded joint or other suitable air-tight joint that is capable of maintaining a vacuum in the interior space 42 of the tubular primary structure 16. Prior to bending the tube as shown in Figs. 8-9, the tube 44 may be filled with powdered silica such as fumed silica or other filler material. In general, the filler material 54 is inserted and compacted into the interior space 42 of tube 44 through one or both open ends 50A or 50B. Alternatively, as discussed below, the filler material 54 may be inserted into the interior space 42 utilizing valves/openings 56 and 58 (Fig. 2) after the tube 44 is deformed (Figs. 8-9), and ends 50A and 50B are interconnected at seam 52.

With reference to Fig. 8, forming tools 82A and 82B are positioned along fold lines 68A and 68D, and a force is applied to the tube 44 adjacent to the end portions 50A and 50B to thereby fold the tube 44 as shown by the arrows "F1" and "F2". Folding of the tube 44 forms end portions 84A and 84B, and corners 46A and 46B, respectively. Sand or other temporary filler material may be positioned inside tube 44 at fold lines 68A and 68D to assist in the bending process.

With further reference to Fig. 9, forming tools 82C and 82D are then positioned adjacent the forming lines or location 68B and 68C (Fig. 5), and a force is applied to a tube 44 to thereby deform the tube as shown by the arrows "F3" and "F4". The ends 50A and 50B of tube 44 are then welded or otherwise secured together to form an air-tight seam 52.

As discussed above, the tubular primary structure 16 includes enlarged front and rear openings 22 and 24. The openings 22 and 24 generally define a rectangular perimeter 20, and the tubular primary structure 16 has a generally rectangular perimeter 18 in an elevational view (e.g. Fig. 9). The tubular primary structure 16 includes a generally rectangular "picture frame" front surface 86A and a rectangular rear surface 86B that is a mirror image of surface 86A. Referring again to Fig. 2, when assembled, the upright rear panel 28 is disposed adjacent or against rear surface 86A, and doors 10A and 10B are disposed against or adjacent surface 86A when the doors 10A and 10B are in the closed position.

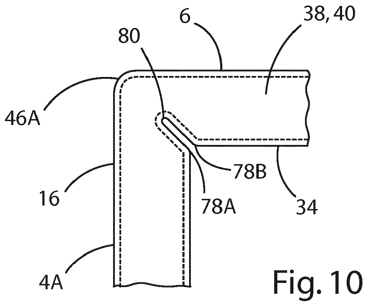

With further reference to Fig. 10, after the tube 44 is deformed or folded to form corners 46A, 46B, 48A and 48B, the side walls of tube 44 generally deform as shown in Fig. 10 to form a crease 80 in inner wall 34 such that the surfaces 78A and 78B are directly adjacent one another, or in contact one another. In this way, the side walls 38 and 40 remain relatively flat in the region of the corners 46A, 46B, 38A and 38B. It will be understood that additional forming steps may be conducted in the vicinity of the corners to ensure that the outer surfaces of walls 38 and 40 are substantially planar.

Referring again to Figs. 2 and 3, valves/openings 56 and 58 can be utilized to remove air from cavity 42 to form a vacuum. As discussed above, the filler material 54 may be inserted and compacted into the space 42 of tube 44 prior to formation of seam 52. Alternately, the tube 44 may be formed as shown in Figs. 4-9, and the filler material 54 may then be inserted into space 42 utilizing valves/openings 56 and 58. If the filler material 54 is inserted into the space 42 prior to formation of seam 52, the primary structure 16 can be positioned in a vacuum chamber (not shown) after formation of seam 52, and one or both of the valves 56 and/or 58 can be opened to thereby form a vacuum in the inner space 42. The valves 56 and 58 can then be closed, and the tubular primary structure 16 can then be removed from the vacuum chamber. If the filler material 54 is inserted into the tube 44 prior to formation of seam 52, the filler material 54 is preferably compacted prior to the bending process shown in Figs. 8 and 9. The filler material 54 may be inserted and compacted by closing off an end 50A (Fig. 5) of tube 44 utilizing a permeable barrier or filter (not shown) that permits airflow, but prevents flow of the filler material 54. The filler material 54 can then be blown into the open end 50B. Air can be circulated along the length of the tube 44 to thereby compact and distribute the filler material 54 throughout the interior space 42.

The filler material 54 may also be added after the tube 44 is bent into an O-shape (e.g. Figs. 8 and 9) and after the seam 52 is formed. In this case, the valves or openings 56 and 58 can be utilized to fill the space 42 with the filler material 54. For example, a permeable barrier or filter may be positioned over opening 58, and filler material 54 may be blown into the space 42 utilizing valve or opening 56. As the filler material 54 is blown into the interior space 42, the airflow through the space 42 compacts the filler material. The tubular structure 16 may then be placed in a vacuum chamber, and the valves or openings 56 and/or 58 may be utilized to form a vacuum in the space 42 as discussed above. In general, the filler material 54 may comprise silica powder such as fumed silica or other porous material. The filler material 54 counteracts the inward forces acting on tube 44 due to the vacuum in space 42 and thereby prevents collapse or deformation of the side walls 34, 36, 38 and 40 of tubular structure 16.

## Claims

1. A method of forming a vacuum insulated refrigerator housing structure (2), the method comprising:
extruding an elongated tube (44) having opposite open ends defining a length there between, the elongated tube (44) having a substantially uniform cross sectional shape along the length of the tube (44), wherein the elongated tube (44) defines generally planar first and second oppositely-facing primary outer surfaces (34, 36) and first and second end surfaces (38, 40) extending between the first and second primary outer surfaces (34, 36);
sealing the opposite open ends to form an airtight and continuous insulating space (42) within the tube (44);
forming a vacuum in the airtight insulating space (42);
deforming the tube (44) along at least four fold lines (68A-68D) to form at least four corners (46A,B, 48A,B) whereby portions of the first primary surface (34, 36) adjacent each corner (46A,B, 48A,B) are substantially orthogonal relative to one another, opposite ends of the tube (44) being positioned adjacent one another;
connecting the opposite ends together to form a refrigerator housing structure (16) having spaced apart generally upright side walls and spaced apart upper and lower side walls extending between the generally upright side walls, wherein the refrigerator housing structure (16) defines an internal space (14) and vertically enlarged front and rear openings (22, 24); and
attaching an insulated rear panel (26) to the refrigerator housing structure (16) to at least partially close off the enlarged rear opening (24).

2. The method of claim 1, including:
attaching at least one movable door (10A, B) to the refrigerator housing structure (16), whereby the movable door (10A, B) can be shifted between a closed position that restricts access to the internal space (14), and an open position permitting access to at least a portion of the internal space (14).

3. The method according to any one of the preceding claims, wherein:
the tube (44) comprises at least one of: a metal material; an impermeable polymer material; first and second layers of an impermeable polymer material that are formed by extruding; first and/or second layers of substantially impermeable polymer material formed by extruding; the first and second layers of substantially impermeable extruded polymer material that define substantially uniform first and second thicknesses, respectively, wherein the first thickness is much less than the second thickness.

4. The method according to any one of the preceding claims, wherein:
the opposite ends of the tube (44) are welded together to form a seam (52).

5. The method according to any one of the preceding claims, including:
filling the insulating space (42) with a porous filler material.

6. The method of claim 5, including:
compacting the porous filler material prior to forming a vacuum in the insulating space (42).

7. The method of claim 6, wherein:
the porous filler material comprises fumed silica powder.

8. The method according to any one of the preceding claims, wherein:
the tube (44) is placed in a vacuum chamber prior to sealing the opposite ends of the tube (44).

9. The method according to any one of the preceding claims, including:
forming an indentation in at least one of the primary outer surfaces or the end surfaces at each of the fold lines (68A-D) prior to forming the four corners (46A,B, 48A,B).

10. The method of claim 1, wherein:
forming the tube (44) includes simultaneously extruding first and second polymer materials to form first and second layers.

11. The method of claim 10, wherein:
the first polymer material comprises EVOH.

12. The method of claim 1, 10 or 11, including at least one of:
(a) filling the tube (44) with a porous filler material prior to forming a vacuum in the air-tight insulating space (42);
(b) positioning the tube (44) in a vacuum chamber prior to sealing off the opposite ends.

13. A vacuum insulated refrigerator housing structure (16) formed by the method of any one of the preceding claims and comprising:
a pair of horizontally spaced apart upright side walls (4A, B) defining upper and lower end portions;
an upper side wall (6) having opposite ends connected to the upper end portions of the upright side walls (4A, B);
a lower side wall (8) having opposite ends connected to the lower end portions of the upright side walls (4A, B);
wherein the upright side walls (4A, B) and the upper and lower side walls (6, 8) comprise a one piece integral metal tubular structure forming an airtight insulating space (42) within the upright side walls (4A, B) and the upper and lower wide walls (6, 8), and wherein the airtight insulating space (42) upon evacuation forms a vacuum.

## Patentansprüche

1. Verfahren zum Bilden einer vakuumisolierten Kühlschrankgehäusestruktur (2), wobei das Verfahren umfasst:
Extrudieren eines länglichen Rohrs (44), das gegenüberliegende offene Enden aufweist, die eine Länge dazwischen definieren, wobei das längliche Rohr (44) eine im Wesentlichen einheitliche Querschnittsform entlang der Länge des Rohrs (44) aufweist, wobei das längliche Rohr (44) allgemein ebene erste und zweite sich gegenüberliegend zugewandte primäre äußere Oberflächen (34, 36) und erste und zweite Endoberflächen (38, 40), die sich zwischen den ersten und zweiten primären äußeren Oberflächen (34, 36) erstrecken, definiert;
Abdichten der gegenüberliegenden offenen Enden, um einen luftdichten und fortlaufenden Isolierraum (42) innerhalb des Rohrs (44) zu bilden;
Bilden eines Vakuums in dem luftdichten Isolierraum (42);
Verformen des Rohrs (44) entlang wenigstens vier Faltelinien (68A-68D), um wenigstens vier Ecken (46A, B, 48A, B) zu bilden, wobei Abschnitte der ersten primären Oberfläche (34, 36) benachbart zu jeder Ecke (46A, B, 48A, B) im Wesentlichen orthogonal relativ zu einander sind, wobei gegenüberliegende Enden des Rohrs (44) benachbart zu einander positioniert sind;
Verbinden der gegenüberliegenden Enden mit einander, um eine Kühlschrankgehäusestruktur (16) zu bilden, die beabstandete allgemein aufrechte Seitenwände und beabstandete obere und untere Seitenwände, die sich zwischen den allgemein aufrechten Seitenwänden erstrecken, aufweist, wobei die Kühlschrankgehäusestruktur (16) einen inneren Raum (14) und vertikal vergrößerte vordere und hintere Öffnungen (22, 24) definiert; und
Befestigen eines isolierten hinteren Bretts (26) an der Kühlschrankgehäusestruktur (16), um die vergrößerte hintere Öffnung (24) wenigstens teilweise zu verschließen.

2. Verfahren nach Anspruch 1, beinhaltend:
Befestigen wenigstens einer bewegbaren Tür (10A, B) an der Kühlschrankgehäusestruktur (16), wobei die bewegbare Tür (10A, B) zwischen einer geschlossenen Position, die einen Zugang zu dem inneren Raum (14) einschränkt, und einer geöffneten Position, die den Zugang zu wenigstens einem Abschnitt des inneren Raums (14) zulässt, verschoben werden kann.

3. Verfahren nach einem der vorstehenden Ansprüche, wobei:
das Rohr (44) mindestens eines der Folgenden umfasst: ein Metallmaterial; ein undurchlässiges Polymermaterial; erste und zweite Schichten von einem undurchlässigen Polymermaterial, die durch Extrudieren gebildet sind; erste und/oder zweite Schichten von im Wesentlichen undurchlässigem Polymermaterial, die durch Extrudieren gebildet sind; wobei die ersten und zweiten Schichten von im Wesentlichen undurchlässigem extrudierten Polymermaterial, die im Wesentlichen einheitliche erste und zweite Dicken definieren, wobei die erste Dicke viel geringer ist als die zweite Dicke.

4. Verfahren nach einem der vorstehenden Ansprüche, wobei:
die gegenüberliegenden Enden des Rohrs (44) zusammengeschweißt werden, um einen Saum (52) zu bilden.

5. Verfahren nach einem der vorstehenden Ansprüche, beinhaltend:
Füllen des Isolierraums (42) mit einem porösen Füllmaterial.

6. Verfahren nach Anspruch 5, beinhaltend:
Verdichten des porösen Füllmaterials, bevor ein Vakuum in dem Isolierraum (42) gebildet wird.

7. Verfahren nach Anspruch 6, beinhaltend:
das poröse Füllmaterial Kieselsäurepulver umfasst.

8. Verfahren nach einem der vorstehenden Ansprüche, wobei:
das Rohr (44) in einer Vakuumkammer platziert wird, bevor die gegenüberliegenden Enden des Rohrs (44) abgedichtet werden.

9. Verfahren nach einem der vorstehenden Ansprüche, beinhaltend:
Bilden einer Einkerbung in wenigstens einer der primären äußeren Oberflächen oder der Endoberflächen an jeder der Faltelinien (68A-D), bevor die vier Ecken (46A, B, 48A, B) gebildet werden.

10. Verfahren nach Anspruch 1, wobei:
Bilden des Rohrs (44) ein gleichzeitiges Extrudieren von ersten und zweiten Polymermaterialien, um erste und zweite Schichten zu bilden, beinhaltet.

11. Verfahren nach Anspruch 10, wobei:
das erste Polymermaterial EVOH umfasst.

12. Verfahren nach Anspruch 1, 10 oder 11 beinhaltend wenigstens eines der Folgenden:
(a) Füllen des Rohrs (44) mit einem porösen Füllmaterial bevor ein Vakuum in dem luftdichten Isolierraum (42) gebildet wird;
(b) Positionieren des Rohrs (44) in einer Vakuumkammer bevor die gegenüberliegenden Enden abgedichtet werden.

13. Vakuumisolierte Kühlschrankgehäusestruktur (16), die durch das Verfahren nach einem der vorstehenden Ansprüche gebildet ist, und umfassend:
ein Paar von horizontal beabstandeten aufrechten Seitenwänden (4A, B), die obere und untere Endabschnitte definieren;
eine obere Seitenwand (6), die gegenüberliegende mit den oberen Endabschnitten der aufrechten Seitenwände (4A, B) verbundene Enden aufweist;
eine untere Seitenwand (8), die gegenüberliegende mit den unteren Endabschnitten der aufrechten Seitenwände (4A, B) verbundene Enden aufweist;
wobei die aufrechten Seitenwände (4A, B) und die oberen und unteren Seitenwände (6, 8) eine einstückige integrale rohrförmige Struktur aus Metall umfassen, die einen luftdichten Isolierraum (42) innerhalb der aufrechten Seitenwände (4A, B) und der oberen und unteren Seitenwände (6, 8) bildet, und wobei der luftdichte Isolierraum (42) auf eine Evakuierung hin ein Vakuum bildet.

## Revendications

1. Procédé de formation d'une structure de logement de réfrigérateur isolée sous vide (2), le procédé comprenant :
l'extrusion d'un tube allongé (44) ayant des extrémités ouvertes opposées définissant une longueur entre elles, le tube allongé (44) ayant une forme en coupe transversale sensiblement uniforme sur la longueur du tube (44), dans lequel le tube allongé (44) définit une première et une seconde surface externe primaire (34, 36) généralement planaires en regard l'une de l'autre et une première et une seconde surface d'extrémité (38, 40) s'étendant entre les première et seconde surfaces externes primaires (34, 36) ;
l'étanchéisation des extrémités ouvertes opposées pour former un espace isolant étanche à l'air et continu (42) à l'intérieur du tube (44) ;
la formation d'un vide dans l'espace isolant étanche à l'air (42) ;
la déformation du tube (44) le long d'au moins quatre lignes de pliage (68A-68D) pour former au moins quatre points (46A, B, 48A, B) de sorte que des parties de la première surface primaire (34, 36) adjacentes à chaque coin (46A, B, 48A, B) soient sensiblement orthogonales l'une par rapport à l'autre, les extrémités opposées du tube (44) étant positionnées adjacentes l'une à l'autre ;
le raccordement conjoint des extrémités opposées pour former une structure de logement de réfrigérateur (16) ayant des parois latérales généralement verticales espacées l'une de l'autre et des parois latérales supérieure et inférieure espacées l'une de l'autre s'étendant entre les parois latérales généralement verticales, dans lequel la structure de logement de réfrigérateur (16) définit un espace interne (14) et des ouvertures avant et arrière verticalement élargies (22, 24) ; et
la fixation d'un panneau arrière isolé (26) à la structure de logement de réfrigérateur (16) pour fermer au moins en partie l'ouverture arrière élargie (24).

2. Procédé selon la revendication 1, comprenant :
la fixation d'au moins une porte mobile (10A, B) à la structure de logement de réfrigérateur (16), en sorte que la porte mobile (10A, B) puisse être déplacée entre une position fermée qui limite l'accès à l'espace interne (14) et une position ouverte permettant l'accès à au moins une partie de l'espace interne (14).

3. Procédé selon l'une quelconque des revendications précédentes, dans lequel :
le tube (44) comprend au moins l'un(e) des éléments suivants : un matériau métallique ; un matériau polymère imperméable ; une première et une seconde couche d'un matériau polymère imperméable qui sont formées par extrusion ; une première et/ou une seconde couche de matériau polymère sensiblement imperméable formées par extrusion ; la première et la seconde couche de matériau polymère extrudée sensiblement imperméable qui définissent des première et seconde épaisseurs sensiblement uniformes, respectivement, dans lequel la première épaisseur est bien inférieure à la seconde épaisseur.

4. Procédé selon l'une quelconque des revendications précédentes, dans lequel :
les extrémités opposées du tube (44) sont soudées l'une à l'autre pour former un cordon (52).

5. Procédé selon l'une quelconque des revendications précédentes, comprenant :
le remplissage de l'espace isolant (42) par un matériau de charge poreux.

6. Procédé selon la revendication 5, comprenant :
le compactage du matériau de charge poreux avant de former un vide dans l'espace isolant (42).

7. Procédé selon la revendication 6, dans lequel :
le matériau de charge poreux comprend de la poudre de silice fumée.

8. Procédé selon l'une quelconque des revendications précédentes, dans lequel :
le tube (44) est placé dans une chambre à vide avant d'étancher les extrémités opposées du tube (44).

9. Procédé selon l'une quelconque des revendications précédentes, comprenant :
la formation d'une indentation dans au moins l'une des surfaces externes primaires ou des surfaces d'extrémité dans chacune des lignes de pliage (68A-D) avant de former les quatre coins (46A, B, 48A, B).

10. Procédé selon la revendication 1, dans lequel :
la formation du tube (44) inclut l'extrusion simultanée du premier et du second matériau polymère pour former une première et une seconde couche.

11. Procédé selon la revendication 10, dans lequel :
le premier matériau polymère comprend de l'EVOH.

12. Procédé selon la revendication 1, 10 ou 11, comprenant au moins l'une des opérations suivantes :
(a) le remplissage du tube (44) avec un matériau de charge poreux avant de former un vide dans l'espace isolant étanche à l'air (42) ;
(b) le positionnement du tube (44) dans une chambre à vide avant d'étancher les extrémités opposées.

13. Structure de logement de réfrigérateur isolée sous vide (16) formée par le procédé selon l'une quelconque des revendications précédentes et comprenant :
une paire de parois latérales verticales horizontalement espacées l'une de l'autre (4A, B) définissant des parties d'extrémité supérieures et inférieures ;
une paroi latérale supérieure (6) ayant des extrémités opposées raccordées aux parties d'extrémité supérieures des parois latérales verticales (4A, B) ;
une paroi latérale inférieure (8) ayant des extrémités opposées raccordées aux parties d'extrémité inférieures des parois latérales verticales (4A, B) ;
dans laquelle les parois latérales verticales (4A, B) et les parois latérales supérieures et inférieures (6, 8) comprennent une structure tubulaire métallique d'un seul tenant formant un espace isolant étanche à l'air (42) dans les parois latérales verticales (4A, B) et les parois latérales supérieures et inférieures (6, 8) et dans laquelle l'espace isolant étanche à l'air (42) forme un vide par évacuation.
